# EUROPÄISCHE PATENTSCHRIFT

(11) **EP 0 650 432 B1**
(45) Veröffentlichungstag und Bekanntmachung des Hinweises auf die Patenterteilung: **20.01.1999**
(21) Anmeldenummer: 94917588.9
(22) Anmeldetag: 09.05.1994
(51) Int. Cl.: B62M 3/04

(54) **VORRICHTUNG ZUR ÄNDERUNG DER PEDALARMLÄNGE**
DEVICE FOR ALTERING THE LENGTH OF A PEDAL CRANK
DISPOSITIF PERMETTANT DE MODIFIER LA LONGUEUR D'UNE MANIVELLE DE PEDALE

(30) Priorität: 19.05.1993 IT BL930011
(43) Veröffentlichungstag der Anmeldung: 03.05.1995
(73) Patentinhaber: GIUSTOZZI, Ivano, I-32028 Trichiana (IT)
(72) Erfinder: GIUSTOZZI, Ivano, I-32028 Trichiana (IT)
(74) Vertreter: Wablat, Wolfgang, Dr.Dr.
(86) Internationale Anmeldenummer: EP9401466
(87) Internationale Veröffentlichungsnummer: WO9426581

(56) Entgegenhaltungen:
- DE-A- 2 610 644
- FR-A- 2 356 550
- FR-A- 2 633 690
- US-A- 5 207 119

## Beschreibung

Die vorliegende Erfindung betrifft eine neue Vorrichtung, die insbesondere für Fahrradpedale bestimmt ist und es ermöglicht, diese zu verlängern, und zwar in der Weise, daß im Moment der größten Kraftanstrengung während des Pedaltrittes ein längerer Hebelarm zur Verfügung steht.

Eine derartige Vorrichtung ist aus der US-Patentschrift 5 207 119 bekannt. Diese Vorrichtung umfaßt ein Sonnenradpaar, das fest mit dem Fahrradrahmen verbunden wird, wobei jedes Sonnenrad mit einem Planetenrad gleichen Durchmessers im Eingriff steht. Von den Planetenrädern steht jeweils radial ein Hebel ab, der die Wechselbewegung des zugehörigen Pedalarms bewirkt. Die Pedalarme bestehen jeweils aus einem inneren und einem äußeren Teil. Die Hebel ändern zudem die Winkelorientierung der Pedalarme, indem sie diese in die Arbeitshubzone bewegen und solange wie möglich im Arbeitshub halten. Hierdurch soll ein Totpunkt bei dem Pedalmechanismus verhindert werden.

Die wesentliche Neuerung der Vorrichtung gemäß der vorliegenden Erfindung liegt im Einsatz einer speziell geformten Spindel, die ein Zahnradgetriebe für die Regulierung der Verlängerungsbewegung der Pedale trägt und gleichzeitig imstande ist, diese Bewegung zu übertragen, wobei die Spindel in jedem Falle im Inneren eines Zahnkranzes oder Zahnrades eines Planetengetriebes angeordnet ist.

Das Problem, Pedale zur Verfügung Zu haben, welche im Moment der größten Kraftanstrengung eine größere Länge aufweisen, um ein besseres Drehmoment zu gewähren, ist die Grundlage zahlreicher Studien und vieler theoretischer Lösungen, welche jedoch auf der Ebene der industriellen Produktion wenig Erfolg erzielt haben.

Die Schwierigkeiten, welche bislang bei den bis heute vorgeschlagenen Lösungen eine Realisierung in weitem Umfang verhindert haben, sind der Kompliziertheit dieser Lösungen zuzuschreiben; ferner auch den Problemen der mechanischen Festigkeit in Bezug auf die kleinen Ausmaße der Teile, die notwendigerweise sehr beengt untergebracht werden müssen.

Einen bemerkenswerten Beitrag zur Überwindung dieser Probleme leistet eine durch den Inhaber der vorliegenden Anmeldung angemeldete Vorrichtung mit einem Exzenter zur Änderung des Drehmoments eines Hebelpaares (siehe italienische Anmeldung BL 92 A 02 vom 24. April 1992) sowie eine angemeldete Verbesserung dieser Vorrichtung (siehe italienische Anmeldung BL A 08 vom 20. Juli 1992).

Die praktische Verwirklichung der in den vorgenannten Anmeldungen vorgeschlagenen Vorrichtungen hat einen deutlichen Fortschritt bei der Lösung des ursprünglichen Problems ergeben, wobei Vorteile sowohl gegenüber dem Einsatz herkömmlicher Pedale als auch gegenüber anderen existierenden Neuerungen verzeichnet wurden. Diese Verwirklichungen haben aber auch einige Grenzen und Nachteile aufgezeigt, die in der Logik der vorgeschlagenen Ideen sehr schwer zu überbrücken sind.

Die hauptsächliche Einschränkung bei der Verwirklichung der erwähnten Patente ergibt sich aus dem erforderlichen Platzbedarf, den ein Satellitenrad bei seiner Drehung um einen an einer Nabe befestigten Zahnkranz beansprucht; ferner ist die Verwirklichung durch den Platzbedarf für die Rotation eines Pleuel-Hebelsystems des Satelittenrades eingeschränkt.

Ein weiterer Nachteil besteht in der Schwierigkeit, die Vorrichtung in einem Gehäuse unterzubringen, um das Eindringen von Schmutz zu verhindern und die Mechanik wartungsfrei zu gestalten, und zwar ohne weiteren Platz zu beanspruchen.

Ein weiterer Nachteil, den man bei den realisierten Modellen der genannten Patente festgestellt hat, besteht in einer leichten Ovalisierung des Pedaltrittes, die dadurch bedingt ist, daß der Mittelpunkt der Vorrichtung nicht mit demjenigen der Tragnabe des Übersetzungszahnrades übereinstimmt.

Aufgabe der vorliegenden Erfindung ist es, eine Vorrichtung mit veränderlicher Pedalarmlänge zu schaffen, die sich durch eine kompaktere Bauweise auszeichnet, als Vorrichtungen mit einem äußeren Zahnkranz und einem außen umlaufenden Satellitenrad.

Eine weitere Aufgabe dieser Erfindung ist es, die Zahnräder gänzlich vor Staub und Schmutz der Straße zu schützen. Ferner bezweckt diese Erfindung jegliche Ovalisierung des Pedalumlaufes zu eliminieren.

Diese Aufgaben werden bei der erfindungsgemäßen Vorrichtung nach Ansprüchen 1 und 2 gelost.

Hierdurch wird eine Vorrichtung geschaffen, mit welcher man in der Phase der größten Kraftanstrengung einen verlängerten Pedalarm zur Verfügung hat, und zwar ohne den Nachteil eines größeren Platzbedarfes und ohne die Probleme der Reinhaltung und Schmierung, die bei den bestehenden Vorrichtungen vorhanden sind.

Durch die kompakte Bauweise der Spindel und der Übersetzungszahnräder ist es möglich, diese im Inneren der tragenden Pedalnabe anzuordnen und dadurch vollauf vor Verschmutzung zu schützen. Die erfindungsgemäße Vorrichtung kann somit in solider und sicherer Ausführung verwirklicht werden. Darüber hinaus wird durch die koaxiale Anordnung von Pedalwelle und Spindel jegliche Ovalisierung des Pedalumlaufes verhindert, die bekannterweise ruckartige Stöße verursacht. Die erfindungsgemäße Vorrichtung garantiert daher einen perfekten Rundlauf des Pedaltrittes.

Im folgenden wird die Erfindung anhand eines Ausführungsbeispiels und mit Bezug auf die beiliegende Zeichnung näher erläutert.

Es zeigen:
- Fig. 1: einen vertikalen Schnitt einer Spindel oder Lagerung zur Aufnahme der Zahnräder im Inneren der Nabe;
- Fig. 2: einen Axialschnitt eines Lagerkörpers zur Aufnahme der Spindel gemäß Fig. 1 mit zwei seitlichen Deckein in Explosionsdarstellung;
- Fig. 3: einen Querschnitt des Lagerkörpers gemäß Fig. 2 mit der Spindel gemäß Fig. 1 und den mit der Spindel verbundenen Zahnrädern, gemäß dem Schnitt III-III der Fig. 4;
- Fig. 4: einen Axialschnitt des Lagerkörpers der Fig. 2, und zwar komplett mit der Spindel und den im Eingriff befindlichen Zahnrädern;
- Fig. 5: in kleinerem Maßstab einen Axialschnitt desselben Lagerkörpers der Fig. 4, aber komplett mit allen anderen benötigten Teilen zur Verlängerung der Pedalarme;
- Fig. 6: eine Seitenansicht der Vorrichtung, und zwar in einer Pedalarmstellung, in welcher einer der Pedalarme voll verlängert und der andere voll eingezogen ist;
- Fig. 7: eine Seitenansicht der Vorrichtung gemäß Fig. 6, wobei die Pedalarme um 45° gegenüber der Stellung in Fig. 6 gedreht sind;
- Fig. 8: eine weitere Seitenansicht der Vorrichtung gemäß Fig. 6, wobei die Pedalarme aber um weitere 60° gegenüber der Stellung in Fig. 7 gedreht sind, und
- Fig. 9: eine Seitenansicht der Vorrichtung in einer Stellung, in der die Pedalarme gegenüber der Ausgangsstellung in Fig. 6 um 180° gedreht sind.

Gemäß dem in der Zeichnung dargestellten Ausführungsbeispiel weist die erfindungsgemäße Vorrichtung eine Spindel 1 auf, die aus zwei Naben 2 und 3 besteht. Die Naben 2 und 3 sind miteinander durch Stege oder Wände 3 und 4 derart verbunden, daß in der Spindel 1 ein Zwischenraum 5 ausgebildet ist, der zentral und symmetrisch zu den Naben 2 und 3 angeordnet ist. Beide Naben 2 und 3 haben eine durchgehende Bohrung 6, die an beiden Enden mit einem Innengewinde 9 versehen ist. Darüber hinaus können in der Bohrung 6 Lagersitze 7 zur Aufnahme von Wälz- oder Gleitlagern 8 vorgesehen sein.

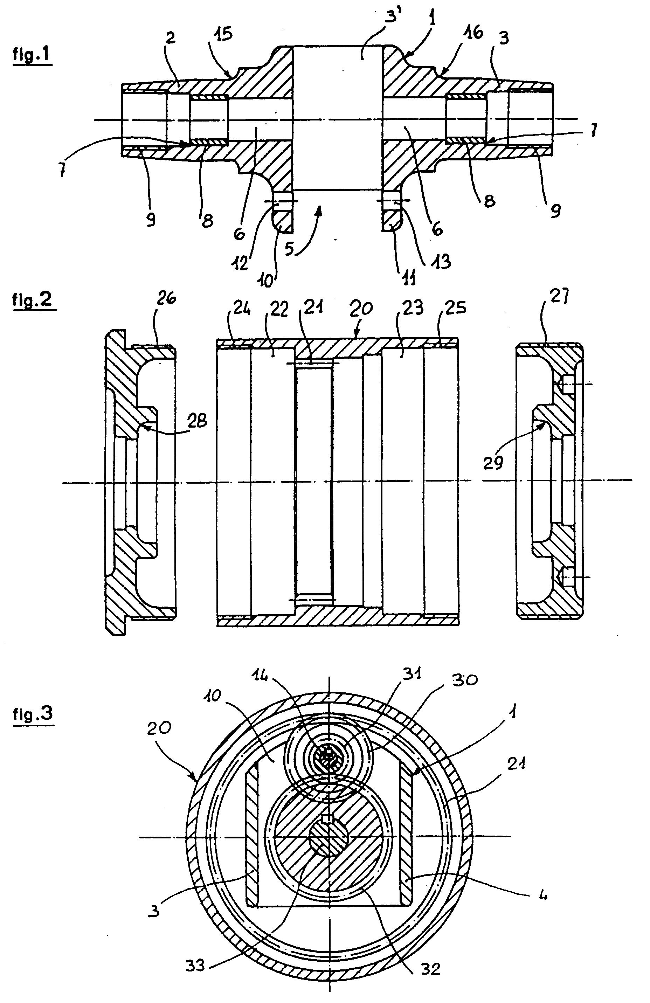

Aus Fig. 1 ist zu erkennen, daß die Naben 2 und 3 Vorsprünge 10 und 11 aufweisen, in denen Bohrungen 12 und 13 ausgebildet sind. Zudem weisen die Naben 2 und 3 kehlförmige Absätze 15 und 16 auf, die weiter unten beschrieben sind.

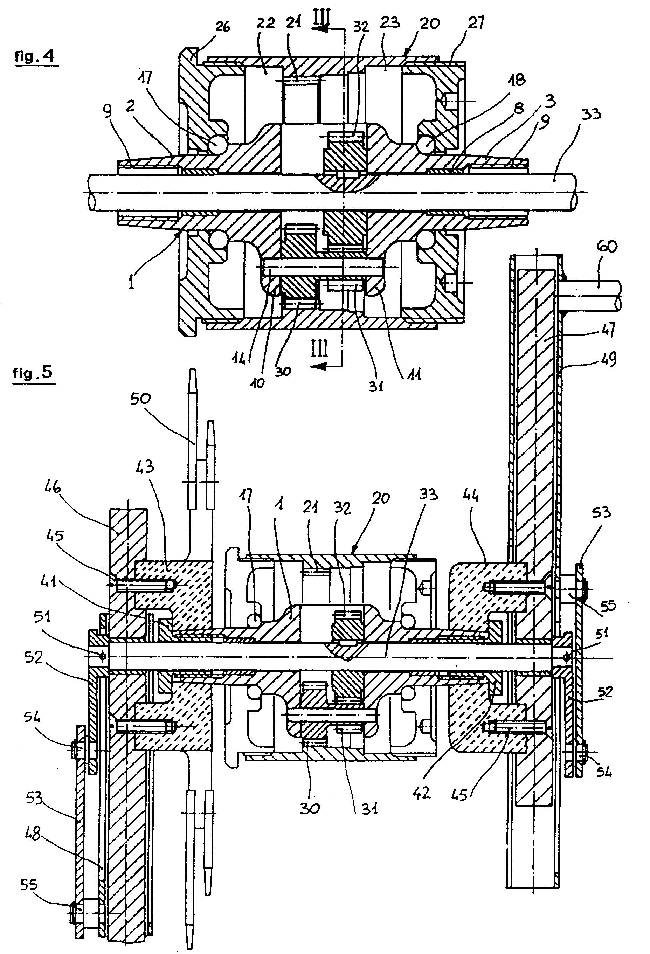

Wie die Figuren 4 und 5 zeigen, ist die Spindel 1 in einem Lagerkörper 20 gelagert. Dieser Lagerkörper 20 besteht vorzugsweise aus einem zylindrischen Körper, der, wenn es sich z.B. um neue Fahrräder handelt, anstelle der herkömmlichen Pedalnabe oder, bei bereits im Handel befindlichen Fahrrädern, nahe der bestehenden Nabe am Fahrradrahmen befestigt werden kann.

Der Lagerkörper 20 weist innen einen Zahnkranz 21 auf, an den sich seitlich zweckmäßigerweise Aussparungen 22 und 23 anschließen. Ferner ist der Lagerkörper 20 an seinen Enden mit Gewinden 24 und 25 versehen, die zur Aufnahme von Deckeln 26 und 27 dienen.

Wie aus den Figuren 2 und 4 hervorgeht, weisen die Deckel 26 und 27 Lagersitze 28 und 29 auf, welche zusammen mit den kehlförmigen Absätzen 15 und 16 der Spindel 1 zwei Kugellager 17 und 18 aufnehmen können. Die Spindel 1 ist somit abgeschlossen und kann im Lagerkörper 20 rotieren.

Die Vorsprünge 10 und 11 der Naben 2 und 3 haben, wie oben bereits erwähnt, zwei Bohrungen 12 und 13, in denen eine Welle 14 gelagert ist. Diese Welle 14 nimmt zwei Zahnräder 30 und 31 auf, die vorzugsweise in einem einteiligen Doppelzahnrad zusammengefaßt sind.

Das kleinere Zahnrad 31 steht in direktem Eingriff mit dem Zahnrad 32, welches auf der Welle 33 aufgekeilt ist, während das andere Zahnrad 30 direkt in den Zahnkranz 21 des Lagerkörpers 20 eingreift.

Die Welle 33 ist koaxial in der Bohrung 6 der Spindel 1 angeordnet, so daß die Spindel 1 auf der Welle 33 rotieren kann. Zur Herabsetzung der Reibung können Wälz- oder Gleitlager 8 innerhalb der Bohrung 6 der Spindel 1 angeordnet sein.

Bei der Montage der Vorrichtung wird die mit der Welle 33 und den Zahnrädern 30, 31 und 32 versehene Spindel 1 in den Lagerkörper 20 eingeführt, und zwar derart, daß das Zahnrad 30 in den Zahnkranz 21 eingreift. Danach werden die Kugellager 17 und 18 auf der Spindel 1 montiert und die Deckel 26 und 27 in die Gewinde 24 und 25 eingeschraubt.

Man erhält somit den Kernteil der Vorrichtung, der insbesondere in Fig. 4 dargestellt ist. Wird nun die Spindel z.B. um 90° gedreht, so werden die Welle 14 und das Zahnrad 30 eine analoge Bewegung ausführen, wobei das Zahnrad 30 gleichzeitig wegen des Eingriffes in den Zahnkranz 21 mit entgegengesetztem Drehsinn um die eigene Achse dreht. Mit der Drehung des Zahnrades 30 erfolgt gleichzeitig eine gleichsinnige Rotation des Zahnrades 31, welches fest mit dem Zahnrad 30 gekoppelt ist.

Es ist klar, daß eine Drehung des Zahnrades 31 eine gegensinnige Drehung des Zahnrades 32 bewirkt, welches auf der Welle 33 aufgekeilt ist und in welches das Zahnrad 31 eingreift.

Für die Verwirklichung der vorliegenden Erfindung ist es wichtig, daß das Verhältnis der Zähneanzahl des Zahnkranzes 21 sowie der Zahnräder 30, 31 und 32 so gewählt ist, daß die Welle 33 bei jeder Umdrehung der Spindel 1 zwei Umdrehungen vollführt.

Aus Fig. 5 ist zu erkennen, daß die an den Enden der Naben 2 und 3 vorgesehenen Innengewinde 9 zur Aufnahme von Verschlußschrauben 41 und 42 dienen. Mittels dieser Verschlußschrauben 41 und 42 werden auf den Naben 2 und 3, die vorzugsweise mit konisch ausgebildeten Enden ausgestattet sind, Flansche 43 und 44 befestigt, die ihrerseits durch Schrauben 45 fest mit inneren Teilen 46 und 47 der Pedalarme verbunden sind.

Am Flansch 43 sind mit bekannten und deshalb nicht näher dargestellten Mitteln ein oder mehrere Kettenräder 50 befestigt, die zur Übertragung der Pedalbewegung auf das Hinterrad des Fahrrades dienen.

An den beiden Enden der Welle 33 sind mittels Stiften 51 oder anderen Verbindungssystemen Kurbelarme 52 befestigt, deren anderes Ende mit zugehörigen Pleuelstangen 53 durch Zapfen 54 drehbar verbunden ist. Ihrerseits sind die anderen Enden der Pleuelstangen 53 durch Zapfen 55 an äußeren Teilen 48 und 49 der Pedalarme angelenkt, die gleitend auf den inneren Teilen 46 und 47 angeordnet sind.

Der aus den Kurbelarmen 52, den Pleuelstangen 53 sowie den inneren und äußeren Teilen 46 und 47 bzw. 48 und 49 bestehende Mechanismus ist bereits aus den eingangs genannten Patentanmeldungen bekannt. Die Neuheit der vorliegenden Erfindung besteht dagegen im wesentlichen in der Verbindung dieses Mechanismus mit der speziell geformten Spindel 1, die das Zahnradgetriebe für die Regulierung der Verlängerungsbewegung der Pedale 60 und 61 trägt und innerhalb des Lagerkörpers 20 angeordnet ist.

Die Funktion der erfindungsgemäßen Vorrichtung wird anhand der Figuren 5 bis 9 deutlich. Dreht man z.B. das Pedal 60 des beweglichen Teiles 49 des Pedalarmes, so rotieren auch dessen inneres Teil 47 und der damit verbundene Flansch 44 in gleicher Drehrichtung. Da der Flansch 44 durch die Verschlußschraube 42 fest mit der Nabe 3 der Spindel 1 verbunden ist, muß auch die Spindel 1 in der selben Drehrichtung mitdrehen.

Die Rotation der Spindel 1 bewirkt, daß sich das in ihr gelagerte und mit dem feststehenden Zahnkranz 21 im Eingriff befindliche Zahnrad 30 in gegensinniger Richtung dreht. Diese Drehbewegung wird ebenfalls von dem kleineren Zahnrad 31 vollführt, das mit dem Zahnrad 30 einteilig ausgebildet und auf der Welle 14 im Zwischenraum 5 der Spindel 1 angeordnet ist. Die Drehung des Zahnrades 31 bewirkt seinerseits die Drehung des Zahnrades 32 und der Welle 33, auf die das Zahnrad 32 aufgekeilt ist.

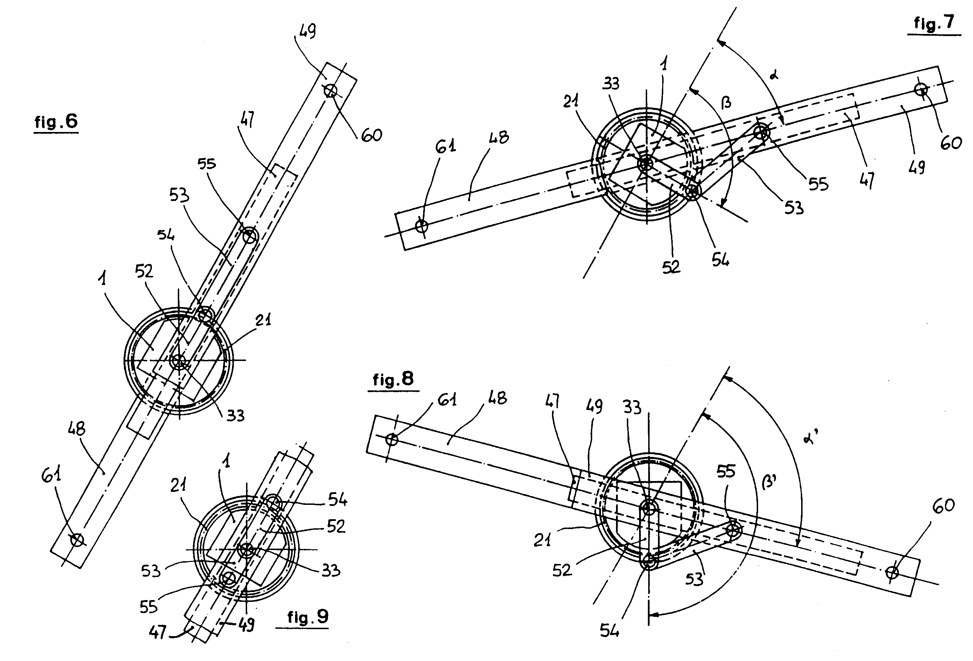

Mit der Welle 33 rotieren gleichzeitig die an den Wellenenden befindlichen Kurbelarme 52, die durch Stifte 51 oder andere Verbindungssysteme fest mit der Welle 33 verbunden sind. Die Rotation der Kurbelarme 52 führt zu einer Bewegung der zugehörigen Pleuelstangen 53, die gelenkig über die Zapfen 55 mit den äußeren Teilen 48 und 49 der Pedalarme verbunden sind. Die Pleuelstangen 53 werden radial zur Welle 33 durch die Zapfen 55 festgehalten, wodurch diese gezwungen werden, sich zusammen mit den äußeren Teilen 48 und 49 der Pedalarme gegenüber der Stellung in Fig. 6 zu verschieben.

Die Fig. 6 zeigt die Position, in welcher der bewegliche Teil 49 des Pedalarmes voll ausgefahren ist, so daß bezüglich des Pedals 60 der größtmögliche Hebelarm zur Verfügung steht. In dieser Stellung fluchtet der Kurbelarm 52 mit der Pleuelstange 53 und dem inneren und äußeren Teil 47 bzw. 49 des Pedalarmes, wobei sich der Drehzapfen 54 auf der gleichen Achse des Zapfens 55 befindet, der die Pleuelstange 53 mit dem beweglichen Teil 49 verbindet. Wie aus Fig. 6 hervorgeht, befindet sich in dieser Stellung das andere Pedal 61 in seinem geringsten Abstand zur Welle 33, da das bewegliche Teil 48 des zugehörigen Pedalarmes vollständig eingefahren ist.

In Fig. 7 ist das Pedal 60 gegenüber der Stellung in Fig. 6 um 45° rotiert worden. Wegen des oben erwähnten Übersetzungsverhältnisses hat der Kurbelarm 52 dabei einen Drehwinkel β von 90° vollführt und diese Drehbewegung gleichzeitig dem Zapfen 54 mitgeteilt. Durch die Drehung des Zapfens 54 wird auch der Zapfen 55 bewegt, der aber nur um den Winkel α des Pedals dreht, weil er radial auf dem inneren Teil 47 des Pedalarms gleitet. Der Zapfen 55 bewegt sich daher gleichzeitig radial zur Welle 33 hin.

An dieser Bewegung des Zapfens 55 ist auch der damit verbundene bewegliche Teil 49 des Pedalarmes beteiligt, so daß sich die Hebelarmlänge des Pedals 60 progressiv radial verkürzt.

Wie aus Fig. 8 ersichtlich ist, wird eine Rotation des Pedals 60 um einen Winkel α' von 75° gegenüber der Stellung in Fig. 6 eine Rotation der Kurbelarme 52 um einen Winkel β' von 150° verursachen und eine progressive Verkürzung des Hebelarmes des Pedals 60 herbeiführen.

In Fig. 9 ist die Situation dargestellt, die sich nach einer Drehung des Pedals 60 um 180° ergibt. Nach den vorstehenden Ausführungen ist es klar, daß der Kurbelarm 52 gleichzeitig eine Drehung von 360° vollführt hat und sich wieder in der Position gemäß Fig. 6 begeben hat, wobei sich die Pleuelstange 53 aber in überlappender radialer Stellung zum Kurbelarm 52 befindet.

In dieser Stellung bewirkt die Pleuelstange 53 die größte Rückführung des beweglichen Teiles 49 des Pedals 60, das in dieser Stellung den kürzesten Hebelarm aufweist, während das Pedal 61 gleichzeitig den größten Abstand zur Welle 33 hat.

Dreht man nun weiter, so ist klar, daß der Hebelarm des Pedals 60 aufgrund der zweiten Umdrehung des Kurbelarmes 52 solange progressiv verlängert wird, bis die Stellung in Fig. 6 wieder erreicht wird. Das Pedal 60 und die Spindel 1 haben dann eine vollständige Umdrehung ausgeführt, während der Kurbelarm 52 und die Welle 33 dagegen zwei vollständige Umdrehungen vollzogen haben.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch machen. Insbesondere besteht die Möglichkeit, den Zahnkranz 21 durch ein an einem der beiden Deckel des Lagerkörpers 20 befestigten Zahnrad zu ersetzen, wobei dieses Zahnrad mit einem Satellitenrad in Eingriff steht, das gegebenenfalls eine Serie anderer Zahnräder antreibt, so daß die Welle 33 doppelt soviel Umdrehung wie das Satellitenrad vollführt.

## Patentansprüche

1. Vorrichtung zur Änderung der Pedalarmlänge, insbesondere für Fahrräder, wobei der Arm jedes Pedals aus einem inneren Teil und einem äußeren Teil besteht, dadurch gekennzeichnet, daß das Pedal am äußeren Teil (48, 49) befestigt ist und der innere Teil (46, 47) fest mit einer Spindel (1) verbunden ist, die in einen Lagerkörper (20) eingebaut ist, und der äußere Teil (48, 49) auf dem inneren Teil (46, 47) gleitet und durch ein Hebelsystem (52, 53) angetrieben wird, das durch eine Welle (33) bewegt wird, und wobei die Spindel (1) koaxial zu der Welle (33) ausgerichtet und mit ihr durch ein Zahnradgetriebe verbunden ist, das aus einem mit der Welle (33) fest verbundenen Zahnrad (32), zwei fest miteinander gekoppelten und in der Spindel (1) gelagerten Zahnrädern (30, 31) sowie einem fest mit dem Lagerkörper(20) verbundenen Zahnkranz (21) besteht, wobei das eine der in der Spindel (1) gelagerten Zahnräder (31) mit dem mit der Welle (33) verbundenen Zahnrad (32) und das andere der in der Spindel (1) gelagerten Zahnräder (30) mit dem Zahnkranz (21) im Eingriff steht.

2. Vorrichtung zur Änderung der Pedalarmlänge, insbesondere für Fahrräder, wobei der Arm jedes Pedals aus einem inneren Teil und einem äußeren Teil besteht, dadurch gekennzeichnet, daß das Pedal am äußeren Teil (48, 49) befestigt ist und der innere Teil (46, 47) fest mit einer Spindel (1) verbunden ist, die in einen Lagerkörper (20) eingebaut ist, und der äußere Teil (48, 49) auf dem inneren Teil (46, 47) gleitet und durch ein Hebelsystem (52, 53) angetrieben wird, das durch eine Welle (33) bewegt wird, und wobei die Spindel (1) koaxial zu der Welle (33) ausgerichtet und mit ihr durch ein Zahnradgetriebe verbunden ist, das aus einem mit der Welle (33) fest verbundenen Zahnrad (32), zwei fest miteinander gekoppelten und in der Spindel (1) gelagerten Zahnrädern (30, 31) sowie einem fest mit einem der beiden Deckel (26, 27) des Lagerkörpers (20) verbundenen Zahnrad besteht, wobei dieses Zahnrad mit einem Satellitenrad in Eingriff steht und welches gegebenenfalls eine Serie anderer Zahnräder antreibt, so daß die Welle (33) doppelt so viele Umdrehungen wie das Satellitenrad vollführt.

3. Vorrichtung nach Anspruch 1 oder 2, dadurch gekennzeichnet, daß die Spindel (1) aus zwei Naben (2, 3) besteht, die durch einen oder mehrere Stege oder Wände (3', 4) miteinander verbunden und an den äußeren Enden mit Aufnahmen für Flansche (43, 44) versehen sind sowie eine durchgehende Bohrung (6) aufweisen, welche an den äußeren Enden jeweils mit einem Innengewinde (9) ausgerüstet ist.

4. Vorrichtung nach Anspruch 1, 2 oder 3, dadurch gekennzeichnet, daß die in der Spindel (1) gelagerten Zahnräder (30, 31) auf einer Welle (14) angeordnet sind, die in Bohrungen (12, 13) innerhalb der Spindel (1) gelagert ist.

5. Vorrichtung nach einem der vorangehenden Ansprüche, dadurch gekennzeichnet, daß die Spindel (1) mit durchgehenden Bohrungen (6) versehen ist, in denen die Welle (33) mittels Wälz- oder Gleitlager (8) gelagert ist und in denen Lagersitze (7) zur Aufnahme der Lager (8) ausgebildet sind.

6. Vorrichtung nach einem der vorangehenden Ansprüche, dadurch gekennzeichnet, daß an der Spindel (1) und an dem Lagerkörper (20) oder an mit dem Lagerkörper (20) verbindbaren Deckeln (26, 27) Lagersitze (15, 16; 28, 29) zur Aufnahme von Kugellagern (17, 18) ausgebildet sind.

7. Vorrichtung nach Anspruch 1, dadurch gekennzeichnet, daß das Verhältnis der Zähneanzahl der verschiedenen Zahnräder (30, 31, 32) und des Zahnkranzes (21) so gehalten ist, daß die Welle (33) und das damit fest verbundene Zahnrad (32) mit doppelter Drehzahl gegenüber der Spindel (1) drehen.

8. Vorrichtung nach einem der vorangehenden Ansprüche, dadurch gekennzeichnet, daß die Welle (33) an ihren Enden fest mit ihr verbundene Kurbelarme (52) aufweist und diesen eine Drehzahl mitteilt, die doppelt so groß ist, wie jene der Pedale (60, 61), so daß bei jeder vollständigen Umdrehung eines Pedals (60, 61) der zugehörige Kurbelarm (52) zwei volle Umdrehungen vollführt.

9. Vorrichtung nach Anspruch 8, dadurch gekennzeichnet, daß jeder Kurbelarm (52) durch einen Zapfen (54) mit einer Pleuelstange (53) drehbar verbunden ist, wobei die Pleuelstange (53) durch einen weiteren Zapfen (55) an dem beweglichen Teil (48, 49) des zugehörigen Pedalarmes angelenkt ist, so daß dieser längs des inneren Teils (46, 47) verschiebbar ist, wobei der größte Wert der Verlängerung des Pedalarmes während der Phase der größten Kraftanstrengung erfolgt.

10. Vorrichtung nach Anspruch 8 oder 9, dadurch gekennzeichnet, daß bei einer halben Umdrehung des Pedals (60, 61) der Pedalarm von seiner geringsten Länge zur größten Länge gleitet, wobei der Kurbelarm (52) eine volle Drehung vollführt, während bei der nächsten halben Umdrehung des Pedals (60, 61) der Kurbelarm (52) nochmals eine volle Umdrehung vollführt und das Pedal (60, 61) wieder in seine Ausgangsposition gelangt.

## Claims

1. Device for altering the length of a pedal arm, in particular for bicycles, the arm of each pedal consisting of an inner part and an outer part, characterized in that the pedal is fastened on the outer part (48, 49) and the inner part (46, 47) is rigidly connected to a spindle (1) fitted in a bearing body (20), and the outer part (48, 49) slides on the inner past (46, 47) and is driven by a lever system (52, 53) moved by a shaft (33), and wherein the spindle (1) is orientated coaxially to the shaft (33) and is connected to it by a gear mechanism consisting of a gear-wheel (32) rigidly connected to the shaft (33), two gear-wheels (30, 31) rigidly coupled to one another and mounted in the spindle (1) and a toothed ring (21) rigidly connected to the bearing body (20), one of the gear-wheels (31) mounted in the spindle (1) engaging with the gear-wheel (32) connected to the shaft (33) and the other of the gear-wheels (30) mounted in the spindle (1) engaging with the toothed ring (21).

2. Device for altering the length of a pedal arm, in particular for bicycles, the arm of each pedal consisting of an inner part and on outer part, characterized in that the pedal is fastened on the outer part (48, 49) and the inner part (46, 47) is rigidly connected to a spindle (1) fitted in a bearing body (20), and the outer part (48, 49) slides on the inner part (46, 47) and is driven by a lever system (52, 53) moved by a shaft (33), and wherein the spindle (1) is orientated coaxially to the shaft (33) and is connected to it by a gear mechanism consisting of a gear-wheel (32) rigidly connected to the shaft (33), two gear-wheels (30, 31) rigidly coupled to one another and mounted in the spindle (1) and a gear-wheel rigidly connected to one of the two covers (26, 27) of the bearing body (20), this gear-wheel engaging with a satellite wheel and optionally driving a number of other gear-wheels so the shaft (33) performs twice as many rotations as the satellite wheel.

3. Device according to claim 1 or 2, characterized in that the spindle (1) consists of two hubs (2, 3) which are connected to one another by one or more webs or walls (3', 4) and are provided at the outer ends with sockets for flanges (43, 44) and have a continuous bore (6) which is equipped with an internal thread (9) at the respective outer ends.

4. Device according to claim 1, 2 or 3, characterized in that the gear-wheels (30, 31) mounted in the spindle (1) are arranged on a shaft (14) mounted in bores (12, 13) inside the spindle (1).

5. Device according to one of the preceding claims, characterized in that the spindle (1) is provided with continuous bores (6) in which the shaft (33) is mounted by means of rolling or sliding bearings (8) and in which bearing seats (7) for receiving the bearing (8) are formed.

6. Device according to one of the preceding claims, characterized in that bearing seats (15, 16; 28, 29) for receiving ball bearings (17, 18) are formed on the spindle (1) and on the bearing body (20) or on covers (26, 27) which can be connected to the bearing body (20).

7. Device according to claim 1, characterized in that the ratio between the number of teeth of the various gear-wheels (30, 31, 32) and the toothed ring (21) is maintained such that the shaft (33) and the gear-wheel (32) rigidly connected thereto rotate at twice the speed of the spindle (1).

8. Device according to one of the preceding claims, characterized in that the shaft (33) has, at its ends, crank arms (52) rigidly connected thereto and imparts to them a speed which is twice as high as that of the pedals (60, 61) so the associated crank arm (52) performs two complete rotations during each complete rotation of a pedal (60, 61).

9. Device according to claim 8, characterized in that each crank arm (52) is rotatably connected to a connecting rod (53) by a peg (54), wherein the connecting rod (53) is articulated to the movable past (48, 49) of the associated pedal arm by a further peg (55) so the pedal arm is displaceable along the inner part (46, 47), the maximum value of the extension of the pedal arm being obtained during the phase of maximum exertion of force.

10. Device according to claim 8 or 9, characterized in that, during half a rotation of the pedal (63, 61), the pedal arm slides from its minimum length to the maximum length, the crank arm (52) performing a complete rotation, whereas the crank arm (52) again performs a complete rotation during the next half rotation of the pedal (60, 61) and the pedal (60, 61) passes into its starting position again.

## Revendications

1. Dispositif pour modifier la longueur des manivelles de pédales, en particulier pour des bicyclettes, dans lequel la manivelle de chaque pédale consiste en une partie intérieure et une partie extérieure,
caractérisé en ce que
la pédale est fixée sur la partie extérieure (48, 49) et la partie intérieure (46, 47) est reliée de façon solidaire à un broche (1), qui est montée dans un corps de palier (20), et la partie extérieure (48, 49) glisse sur la partie intérieure (46, 47) et est entraînée par un système à leviers (52, 53), système qui est déplacé par un arbre (33), et dans lequel la broche (1) est alignée de façon coaxiale par rapport à l'arbre (33) et est reliée avec lui par une transmission à engrenage, qui se compose d'une roue dentée (32), reliée de façon solidaire à l'arbre (33), de deux roues dentées (30, 31) couplée& l'une avec l'autre de façon solidaire et montées sur la broche (1), ainsi que d'une couronne dentée de palier (20), l'une des roues dentées (31), montées sur la broche (1) étant en prise avec la roue dentée (32) reliée à l'arbre (33) et l'autre roue dentée (30) montée sur la broche (1), étant en prise avec la couronne dentée (21).

2. Dispositif pour modifier la longueur des manivelles de pédales, en particulier pour des bicyclettes, dans lequel la manivelle de chaque pédale consiste en une partie intérieure et une partie extérieure,
caractérisé en ce que
la pédale est fixée sur la partie extérieure (48, 49) et la partie intérieure (46, 47) est reliée de façon solidaire à une broche (1), qui est montée dans un corps de palier (20), et la partie extérieure (48, 49) glisse sur la partie intérieure (46, 47) et est entraînée par un système à leviers (52, 53), système qui est déplacé par un arbre (33), et dans lequel la broche (1) est alignée de façon coaxiale par rapport à l'arbre (33) et est relié avec lui par une transmission à engrenages, qui se compose d'une roue dentée (32), reliée de façon solidaire à l'arbre (33), de deux roues dentées (30, 31) couplées l'une avec l'autre de façon solidaire et montées sur la broche (1), ainsi que d'une roue dentée reliée de façon solidaire a l'un des deux couvercles (26, 27) du corps de palier (20), cette roue dentée étant en prise avec une roue satellite, laquelle entraîne le cas échéant une série d'autres roues dentées, de telle sorte que l'arbre (33) accomplit deux fois autant de révolutions que la roue satellite n'en accomplit.

3. Dispositif selon la revendication 1 ou 2,
caractérisé en ce que
la broche (1) se compose de deux moyeux (2, 3), qui sont reliés l'un à l'autre par une ou plusieurs nervures ou parois (3', 4) et sont pourvues aux autres extrémités de logements pour des flasques (43, 44) et présentent un alésage (6), oui va de bout en bout, et qui est pourvu aux extrémités extérieures respectivement d'un filetage intérieur (9).

4. Dispositif selon la revendication 1, 2 ou 3,
caractérisé en ce que
les roues dentées (30, 31) qui sont montées dans la broche (1) sont disposées sur un arbre (14) qui est monté dans des alésages (12, 13) à l'intérieur de la broche (1).

5. Dispositif selon l'une des revendications précédentes,
caractérisé en ce que
la broche (1) est pourvue d'alésages (6) qui vont de bout en bout, dans lesquels l'arbre (33) est monté au moyen de roulements à rouleaux ou de paliers lisses (8) et sont constitués dans leurs sièges (7) de façon à recevoir le roulement (8).

6. Dispositif selon l'une des revendications précédentes,
caractérisé en ce qu'
on constitue des sièges de roulement (15, 16 ; 28, 29) pour recevoir des roulements à billes (17, 18) sur la broche (1) et sur le corps de palier (20) ou sur des couvercles (26, 27) oui peuvent être reliés au corps de palier (20).

7. Dispositif selon la revendication 1,
caractérisé en ce que
le rapport entre le nombre de dents des différentes roues dentées (30, 31, 32) et celui de la couronne dentée (21) est maintenu de telle façon que l'arbre (33) et la roue dentée (32), oui est reliée de façon solidaire à celui-ci, tournent à une vitesse double de celle de la broche (1).

8. Dispositif selon l'une des revendications précédentes,
caractérisé en ce que
l'arbre (33) présente à ses extrémités des manivelles (52) qui sont reliées avec lui de façon solidaire, et imprime à celles-ci une vitesse de rotation qui est deux fois plus grande que chacune des pédales (60, 61) de telle sorte qu'à chaque révolution complète d'une pédale (60, 61) la manivelle correspondante (52) accomplit des révolutions complètes.

9. Dispositif selon la revendication 8,
caractérisé en ce que
chaque manivelle (52) est reliée de façon à pouvoir tourner par un téton (54) à une tige de bielle (53), la tige de bielle (53) étant articulée par un autre téton (55) sur la partie mobile (48, 49) de la manivelle de pédale correspondante, de telle sorte que celle-ci puisse coulisser le long de la partie intérieure (46, 47) l'allongement de la manivelle de la pédale atteignant sa plus grande valeur pendant la phase qui requiert le plus d'effet.

10. Dispositif selon la revendication 8 ou 9,
caractérisé en ce que
quand la pédale (60, 61) a accompli une demi-révolution, la manivelle de la pédale glisse de sa longueur la plus faible à sa longueur la plus grande, la manivelle de la pédale (52) accomplissant un tour complet, tandis que lors de la demi-révolution suivante de la pédale (60, 61) la manivelle (52) accomplit encore une révolution complète et la pédale (60, 61) arrive à nouveau à sa position de départ.
